# EUROPEAN PATENT APPLICATION

(11) **EP 2 953 037 A1**
(43) Date of publication of application: **09.12.2015**
(21) Application number: 14185374.7
(22) Date of filing: 18.09.2014
(51) Int. Cl.: G06F 17/27, G06F 17/30

(54) **Automated multi-grammar language processing system to optimize request handling in contact centers**

(30) Priority: 15.05.2014 US 201414278531
(71) Applicant: Palmonari, Marco, Chicago, IL 60610 (US); Fradiani, Franco, 04017 San Felice Circeo (Latina) (IT)
(72) Inventor: Palmonari, Marco, Chicago, IL 60610 (US); Fradiani, Franco, 04017 San Felice Circeo (Latina) (IT)
(74) Representative: Adamson Jones

(57) **Abstract**

An automated multi-grammar language processing system provides optimized request handling in contact centers. It enables a contact center to receive and analyze requests from users in the form of text messages, such as sms, email, instant messages, voice messages converted to text, etc., and to understand in real time if the request is to be managed by an automated system or queued for processing by a human operator.

## Description

### FIELD OF THE INVENTION

The present invention relates to contact center systems, and, more particularly, to automated text-based message processing using Multi-Grammar Language Processing technologies.

### BACKGROUND OF THE INVENTION

Automated language processing applications are often adopted by contact centers to reduce the amount of requests manually handled by human operators.

Such applications rely on natural language processing technologies that attempt to understand customer requests and provide answers automatically.

Even if natural language technologies have greatly progressed over time, they still often fail in properly understanding customer requests. Lack of context and the complexity of the input that can blend various grammars, registers and languages while they fall within human innate linguistic competence, still pose significant challenges for linguistic technologies.

The widespread use of abbreviations and slang together with the rapid and continuous evolution of SMS registers adopted by the users further add to the complexity of the task.

Most natural language technologies adopt a pipeline of components programmed to extract features from the text. The first component to be executed is typically a Part Of Speech (POS) Tagger. A POS tagger tokenizes a sentence to identify its elements and their grammar category.

This passage is critical to enable the subsequent components to effectively extract named entities, concepts and other features of the text.

A limit of POS taggers is that they are designed to understand perfectly well-formed linguistic input. Thus their performance tends to drop in quality with sentences lacking a proper structure (e.g. verb elliptical constructions) or containing mistyped words, words without in-between spaces, words with spelling errors, redundant single characters, and erroneous use of punctuation marks.

Another significant issue is that most of commonly available POS Taggers are language-specific. If a message is not known a priori to be written in a specific language, a language detection component need to be executed before the POS tagger itself in order to select the right language to use. Language detection components are however of little use in the case of short messages where the frequent use of multiple languages severely impacts their performance. Countries with large immigration patterns like the US where it is common for users to concurrently use Spanish and English are good examples that can only confirm the need for an advance in linguistic technologies as that proposed with this invention.

Given the various issues above described, neither a language detection component nor a POS Tagger can alone resolve the challenge reliably, and their output affects the output of all subsequent components.

Other automated language processing applications used by contact centers leverage rule-based engines to automatically process user requests.

Such engines rely on a set of rules (typically handcrafted) to parse texts and identify elements of a predefined knowledge base.

Unfortunately such systems require a big effort both in terms of coverage and maintenance. A constant effort is required to both produce enough rules to reliably cover the varied and unpredictable linguistic input represented by users' requests and to refine them to meet ever changing communication needs and habits of contact centers (and of the companies they represent) and users.

Thus, if on the one hand this type of engine can theoretically overcome the limitations of natural language processing above mentioned, the large number of rules required to successfully process the authentic linguistic input with all its complexities and variations makes it an unsustainable solution for large data volumes.

Another critical element to take into account for automated language processing applications in contact centers is the level of accuracy necessary to appropriately address user requests with relevant and satisfactory replies. This is crucial as the predefined performance standards are based on the performance of human operators.

Most automated language processing systems typically feature the ability to calculate a confidence score for each understood / not understood/ only partially understood message. Such score is used to decide if the request should be processed automatically or by a human operator.

Such solution, albeit common, is not optimal since, by relying on a single score, the system is prevented from leveraging all available information to produce a more sophisticated evaluation of the required processing mode, i.e. manual vs automated.

There is thus a clear need for an improved language processing system able to overcome the aforementioned problems and, concurrently, automatically process a greater number of messages with greater accuracy correlating confidence information with other real time KPI of the contact centers.

### SUMMARY OF THE INVENTION

From the foregoing, it is seen that it is a problem in the art to provide a system meeting the above requirements. According to the present invention, a system is provided which meets the aforementioned requirements and needs in the prior art. Specifically, the system according to the present invention provides an automated multi-grammar language processing system to optimize request handling, for example in contact centers. The system may enable a contact center to receive and analyze requests from users in the form of text messages (sms, email, instant messages, voice messages converted to text...), and to understand in real time if the request is to be managed by an automated system or queued for processing by a human operator.

The present invention represents a significant step forward in the art. It enables contact centers to manage a larger percentage of requests automatically while at the same time granting full compliancy with the expected high level of service.

According to a first aspect of the present invention there is provided a method for multi-grammar language processing includes the steps of: receiving a user message written in a combination of grammars and languages; analyzing said message to extrapolate, for each element of the message, possible candidates and combinations of candidates matching known elements in the supported grammars; analyzing said candidates and combinations of candidates to match them with known services and responses; analyzing the identified candidates to select the most probable combination of candidates that matches the meaning of the actual request from the user.

The method of the present invention also includes identifying if the message contains structures and elements expressed in natural language and, in such case, further processing the message with a natural language processing system. It also includes determining whether the message is written in its entirety or partially in SMS Language; is written all or in part as a sequence of query keywords; is written all or in part in Natural Language; is written all or in part in multiple languages; and whether the message contains one or more misspelled words.

Additionally, the present invention's method includes storing and analyzing the user conversation history in conjunction with the message received. It also includes determining if an automatic processing system should handle the analyzed request or if it should be forwarded to a human customer support operator.

According to a second aspect of the invention, there is provided a computing system for automatic multi-grammar language processing, the system comprising: a communication device arranged to receive a message from an end user comprising a combination of grammars and languages; one or more data storage device comprising a first database of elements pertaining to supported grammars and a further database of predetermined services and/or responses of the computing system; a message analyzer arranged to process the received message by extrapolating, for each element of the message, possible candidates and combinations of candidates matching known elements in the supported grammars and analyzing said candidates and combinations of candidates to match them with known services and/or responses; the message analyzer arranged to determine a most probable combination of the candidates that matches the meaning of the actual request from the end user.

The message analyzer may process/analyze a message or portion thereof using multiple grammars and/or languages in parallel. The invention may beneficially accommodate complex disambiguation tasks to detect the most probable interpretation of the analyzed message.

The message may comprise one or more misspelled words and/or may be written all or in part in natural language or in multiple languages.

The message analyzer may comprise any, any combination, or all of: a token analyzer; an n-gram analyzer; a disambiguation processor; a natural language processor; a context importer. The system may additionally or alternatively comprise a conditional routing processor.

The token analyzer may be arranged to identify to select the most relevant candidates for each token and to match them to elements represented in the database of predetermined services and/or responses.

The n-gram analyzer may be arranged to process a plurality of tokens, for example output by the token analyzer. The n-gram analyzer may support any or any combination of: smart combinations of tokens; token links to nodes in the database of predetermined services and/or responses; wildcards; token classes; and/or complex regular expressions.

The disambiguation processor may analyze all available candidate combinations of identified tokens and/or n-grams and calculate a ranking of, or for each, said combinations. The ranking may or may not comprise a numeric confidence score. The ranking may be proportional to the probability of said combination to be the best interpretation for the analyzed text. The disambiguation processor may or may not assign a weighted score to each token/n-gram proportional to the probability of said token/n-gram matching an analyzed word or phrase in the text. The disambiguation processor may apply a ranking to said combination according to the number of tokens and/or n-grams therein connected to the same service or response within the database of predetermined services and/or responses.

A summation of the ranking/score of all candidate tokens/n-grams matched to a service/response for the message may be performed. A ranking/score indicative of a match between each identified services/responses for the message may be determined and one or more suitable service/response selected for the message according thereto.

The natural language processor may analyze natural language features and/or structures in the message, for example to resolve issues of word dependencies and syntactic ambiguity. The natural language processor may be selectively activated for a message in dependence on the output of one or more of the token analyzer, the n-gram analyzer and the disambiguation processor. The natural language processor may be activated dependent on detection of one or more phrase structure triggers in the message. The natural language processor may receive an output of the disambiguation processor and may provide additional message disambiguation. The natural language processor may receive as an input one or more output of the token and/or n-gram analyzer, such as one or more tokens, for example normalized tokens.

The context importer access and/or retrieve data from one or more additional/external database. The context importer may access one or more of end user profile data, previous conversation data (messages/responses) between the user and computing system and computer system time metrics. Data imported by the context importer may be used to modify a weighting/ranking applied by the disambiguation processor. The impact in the weighting/ranking of tokens, n-grams, or service elements relating to historical user data may be increased.

The conditional routing processor may receive the message analysis output of the message analyzer and may selectively route the message for an automated response/service or to a human operator computing/display device for manual processing. The conditional routing processor may assess one or more parameter comprising: a confidence score proportional to the likelihood of having properly understood the request, the real time load of the contact center human operators and real time statistics about the measured quality of the automated answers for the specific service in question. One or more message routing parameter threshold (e.g. a maximum or minimum value of confidence score) may determine whether a message is automatically processed rather than forwarded to a customer support operator. Threshold may be calculated automatically and/or dynamically in response to one or more operative metric of the computer system and/or operator.

The message analyzer may access data in one or more database by way of a language knowledge and service/response graph. The graph may correlate all the supported grammars and/or language models and their relationship(s) with the services and/or responses in the further database. The graph may link language models, keywords, n-grams and/or any other entity in a language-related database to the relevant services and/or responses in the further database.

According to a third aspect of the invention, there is provided a data carrier comprising machine readable instructions for the operation of one or more processor of a computer system to function as a message analyzer in accordance with one or more further aspect of the invention.

According to a further aspect of the present invention, there is provided a contact center system that includes a Multi-Grammar Language processing system, for example according to the second or third aspect. The contact centre may further comprise a response and service backend. The contact centre may additionally or alternatively comprise a service and knowledge graph, for example comprising grammars, related keywords, group of keyword, regular expressions, classes of words and language models, any or any combination of which may be linked in the graph to responses and/or to services handled by the contact center.

Any of the optional features defined in relation to any one aspect of the invention may be applied to any further aspect where practicable.

It will be appreciated by the skilled person that any reference to a "processor" herein may relate to one or more process performed by suitable computer processing means and/or computer processing hardware itself. The term "processor" is to be construed accordingly.

Other objects and advantages of the present invention will be more readily apparent from the following detailed description when read in conjunction with the accompanying drawings.

### BRIEF DESCRIPTION OF THE DRAWINGS

Fig. 1 illustrates a contact center system featuring a Multi-Grammar Language Processing System in accordance with one embodiment of the present invention.
FIG. 2 describes a computing device that can be used to implement and execute the Multi-Grammar Language Processing System of the present invention as well as a Response & Service Backend of the present invention.
FIG. 3 illustrates integration between the Multi-Grammar Language Processing System of the present invention and other external components including User Profile Information, a Conversation History Database, and Contact Center real time metrics, capable of providing context information to improve requests understanding and processing.
FIG. 4 is a flow chart with an illustrative example of the type of exchange that may occur between a user and the Contact Center.
FIG. 5 shows internal components of a Multi-Grammar Language Processing System and of its supporting Service & Knowledge Graph.
FIG. 6 illustrates an optimized disambiguation process as implemented in an embodiment of the present invention wherein each identified token/n-gram is attributed a numeric confidence score proportional to the probability of said token/n-gram to match the identified token/s, and to the relevance of said token/n-gram for a specific service/response.
FIG. 7 is a flow chart illustrating the relationship between the components included in the Multi-Grammar Language Processing System of FIG. 5, when processing a request.
FIG. 8 illustrates the Natural Language Processing flow employed by the NLP Sub-system, according to an embodiment of the present invention.
FIG. 9 illustrates a Service & Knowledge Graph, as it may appear in one sample embodiment of the invention.

### DETAILED DESCRIPTION OF THE INVENTION

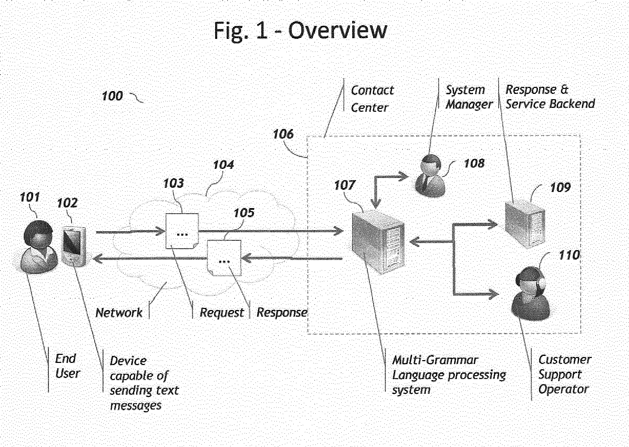

FIG. 1 illustrates a contact center system 100 in accordance with one embodiment of the present invention. The system comprises an end-user device 102 capable of sending messages 103 to a Processing Server 107 through a network 104.

The end-user device 102 can be a handheld device such as a phone, a smartphone, a tablet, a laptop or desktop computer as well as any other device capable of collecting a message from an end-user 101 and transmitting it through a network. The system requires the same device 102, or a different device, to be capable of receiving a response 105 from the Processing Server 106 and of presenting said response to the end-user 101.

In one embodiment of the invention, the end-user 101 is a person requesting some information or actual instructions on how to perform a specific action related to any of the services provided by the contact center. In another embodiment the end-user is a customer communicating information to a contact center. The end-user 101 can be previously known by the contact center or he/she can be a first-time user of the service. The end-user can be authenticated or remain anonymous if the request type allows it.

The network 104 is a telecommunication network; in one embodiment it can be the Internet, in another embodiment a cellular network or any other network capable of receiving and transmitting messages between the end-user device and the processing server. There is no need for the network used to transmit the request to be the same network used to transmit the response. It is common for the request to be sent through the Internet and for the response to be sent through a cellular network in the form of an SMS. Similarly, there is no need for device 102 and processing system 107 to be connected to the same type of network as long as messages 103 and 105 can be successfully delivered across the networks where the device 102 and the processing system 107 are connected.

Request 103 is a message sent by an end-user to the contact center. In one embodiment the message can contain a request to receive information from the contact center, a request for the contact center to perform a specific action on behalf of the end-user, or it can contain information required by the contact center to fulfill a specific operation or to update the end-user profile. In one embodiment of the invention the message is a text message. Said text message can be an SMS, an email, an instant message or a text message collected by a smartphone application, by a web form or by a speech to text processor. In another embodiment the message can be a voice or an audio/video message automatically converted to text.

Response 105 is a message sent by the contact center to the end-user. The message could contain the information requested by the user, the confirmation that an action has been performed on behalf of the user, the confirmation that a request has been fulfilled, a request for the user to provide more information, a thank you message, the confirmation that the request has been queued for the contact center to manage, or an error message. In one embodiment the response 105 is a text message sent as SMS, email, instant message or using a network protocol to deliver it to an application or web page able to display it. Response 105 is not always required; in one embodiment of the invention the system silently processes or discards requests without returning any response to the user.

The system 107 is a Multi-grammar Language Processing System connected to a network 104 and capable of receiving and processing messages sent by end-users. In one embodiment, the Processing System 107 is a computer server running software capable of automatically processing users' requests as hereunder described. In one embodiment of the invention the Processing System 107 is connected to a Response & Service Backend 109 required to fulfill a request once said request has been analyzed and understood by the Processing System itself. The Processing System is capable of directing a user's request to a human contact center operator 110 if this request requires special attention or if the Processing System was unable to properly process and understand it. In order to understand a wide range of user's requests, the Processing System is configured, trained and managed by a System Manager 108. To enhance its capabilities, a Processing System 107 can integrate multiple storages, databases and computing servers not illustrated in the drawings. The main purpose of the Multi-Grammar Language Processing system 107 is to understand a user's request identifying all relevant information required to fulfill the request itself. In one embodiment of the invention the Processing System 107 is able to understand if the request is about retrieving information, if it is requesting an action, what is the specific service requested, what information the user is providing about the service requested, what subject the user requires more information about. More generally the Processing System is able to understand how to route the request to the Response and Service Backend, enriching the request with all the identified information.

The system of the present invention includes also a Response & Service Backend 109 connected to the Processing System 107. In one embodiment, the Response & Service Backend 109 is a dedicated computer server running software capable of fulfilling a service request or to provide relevant information as requested by the user. In another embodiment the Processing System 107 and the Response & Service Backend 109 are hosted on the same server. Relying on the information provided by the Processing System 107, the Backend 109 handles the task of precisely identifying the correct response for the user or it manages the task to actually execute the requested service. In one embodiment of the invention the Response & Service Backend 109 comprises database servers, information services, customer support services, user profiling services, accounting services featuring all the information and services that the contact center is able to handle.

It will be useful to expand on what is meant when discussing the "disambiguation process" referenced herein, as follows.

An n-gram (a group of words) is ambiguous if it can refer to multiple meanings. The "Disambiguation" process refers to a well know activity in the Natural Language Processing domain that should be intended as the task to "chose" a specific "meaning" of a word (or a group of words) among two or more conflicting options.

As an example a user could ask: "Please activate the plan to access the Internet from my mobile phone." When this sentence is analyzed, the word "plan" may refer to any one of the hundreds of "plans" (voice plans, sms plans, data plans, ...) that a Mobile Operator provides.

The "disambiguation process" is tasked to choose which plan the user is referring to by looking at all the other "features" of the sentence, in this specific case the user is clearly referring to an "Internet data plan" as can be understood by looking at the rest of the sentence.

In the literature there are many ways to "disambiguate" the meaning of words (one can find many references especially to "entity extraction and disambiguation"). Those techniques are often domain specific, since the disambiguation process leverages some assumptions about the type or the context of the text being analyzed.

In this specific case there is used custom algorithm (described herein) that implies essentially two activities: 1) Assigning a score to any "options" that an n-gram may refer to; and 2) choose the combinations of options that seems to more likely represent the actual meaning of the sentence.

Step 1 (scoring) is accomplished by leveraging multiple algorithms (well known or custom). For Step 2 (the actual disambiguation), in the preferred embodiment there is provided an optimized and customized version of a well know algorithm to calculate the "Longest Path" in a "Directed Acyclic Graph" (there are numerous references which can be found in the published literature and on the Internet) where "longest path" in this context means the "highest scoring combination".

As described herein, in this context all the identified options form a graph with a score attached to each edge of the graph. The assumption is that the combination better representing the actual meaning of the sentence is the one totalizing the highest score.

With regard to the use of the term N-gram processor, the preferred embodiment contemplates use of a relatively simple custom algorithm (i.e., custom developed) that essentially tries to match all words and group of words to a preloaded list of ngram that has been configured in the system. Any one having skill in this art would be able to implement this type of algorithm suitable for this task. When the algorithm finds a match it stores it and keeps analyzing the other words.

There are multiple commercial and open source libraries to support n-gram based algorithms, such as extraction, matching, storing, etc. Most of these libraries are optimized to achieve greater speed or scalability, whereas on the contrary the present invention's implementation is intended to seek a higher degree of flexibility allowing the user to define more complex types of n-grams, where more complex in this context means n-gram containing not just words but also other features of the sentence (ie. concepts, regular expressions, language models, and so on).

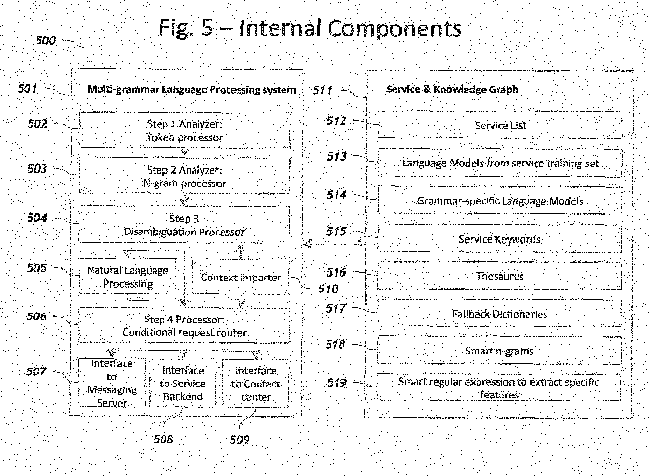

With regard to the terminology describing element 519 in FIG. 5, "smart regular expression to extract specific features", the phrase "regular expressions" is a well known way to express "pattern matching expressions" (ie. a regular expression could be ".* plan" to match "voice plan", "data plan" etc). Here, for example, there is a Wikipedia entry for this phrase.

Further, regular expressions are typically used to match characters and words in a sentence, while for "Smart regular expression" is meant a more flexible (and extended) "regular expression" engine allowing to match not only characters and words in sentences but also "concepts", "services", "language models" and in general other features that the system of the present invention identifies in a sentence.

As an example there could be a "smart regular expression" to describe a service provided by the contact center to "activate" a "plan". Here, the smart regular expression could be "[LM:activation request] .* [E:plans]" where:
[LM:activation_request] matches any word in the activation_request Language Model (a model containing words like "activate", "enable", "add", ...);
".*" would match any word in between (in the "Please active a data plan on my phone" would match the article " a ";
[E:plans] matches all Entities listed in the "plans" list (ie. a list containing "local voice plan", "data plan", "unlimited data plan", "unlimited sms plan", etc.).

Essentially the term "smart" means "extended". And by "extended" is meant allowing the use of more complex class of words/expressions than in a standard regular expression matching engine.

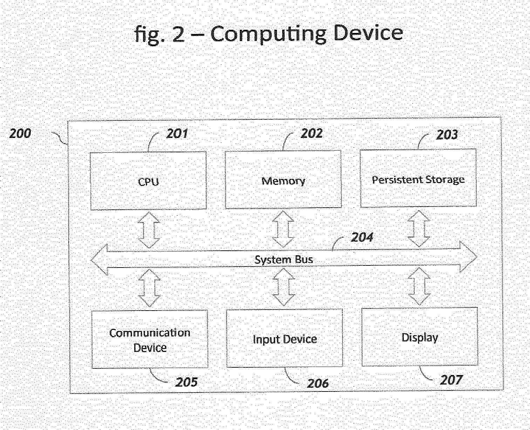

Fig. 2 represents a general-purpose computer system 200 that in one embodiment of the invention can be used to execute software capable of automatically processing users' requests leveraging a Multi-Grammar Language Processing approach. The system 200 of FIG. 2 includes memory 202, a persistent storage 203, a communication device 205, a data bus 204 and a processing unit 201 capable of executing computer software stored in the persistent storage 203. The computing device 200 may include features such as one or more input devices 206 and a display device 207. In one embodiment the system in FIG. 2 may additionally or alternatively represent a server where the Response & Service Backend 109 is executed.

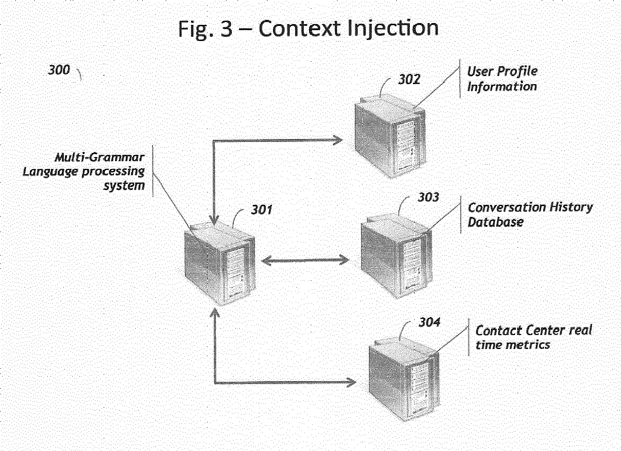

Context injection is shown in FIG. 3, which illustrates the integration between a Multi-Grammar Language Processing System 301 and other external components: User Profile Information 302, Conversation History Database 303 and Contact Center real time metrics 304, capable of providing context information to optimize processing.

The Conversation History Database 303 enables the service to track conversation threads; this is critical to combine information received over multiple messages and to understand messages that may have been split in transit over the network. The latter case happens regularly, in one embodiment, when transmitting messages over a GSM network not properly supporting the transmission of multi-PDU SMS (messages longer than 160 characters).

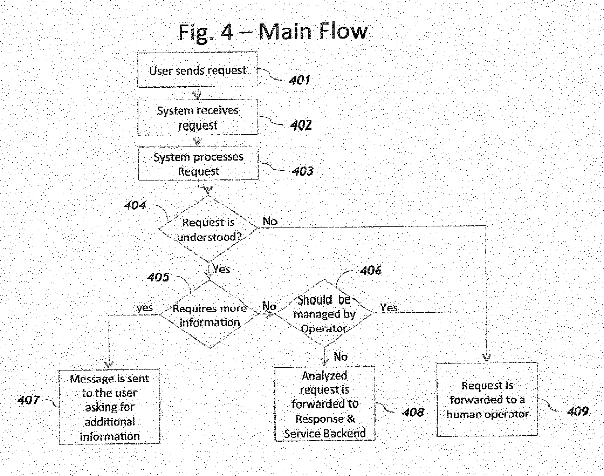

FIG. 4 is a flow chart showing an illustrative example of an exchange that may occur between the end-user and the Contact Center. When an end-user sends (401) a request to the contact center, the request is received (402) by the Multi-Grammar Language Processing System (403). If the request (404) is not understood it is immediately forwarded (409) to a human operator for manual processing. If the request is understood, the Processing System (404) proceeds with verifying (405) if the request is complete or incomplete for the type of service or information requested by the user. In the event of incomplete requests a message is sent (407) to the user requiring sending a new message with the missing information. If the request is complete, the system (406) evaluates whether the processing should be automated with the Response & Service Operator (408) or if instead manual processing by a human operator (409) is required, thus forwarding the request accordingly.

Confronted with Natural Language Processing Systems known in the art, the Multi-Grammar Language Processing System is quite different since it analyzes (502 and 503) a text using multiple grammars and languages in parallel, eventually performing complex disambiguation tasks (504) to detect the most probable interpretation of the analyzed text.

FIG. 5 shows the internal components of a Multi-Grammar Language Processing System 501 and of its supporting Service & Knowledge Graph 511.

According to one embodiment, the Multi-Grammar Language Processing System 501 comprises the following components: Step 1 Analyzer 502, Step 2 Analyzer 503, Step 3 Disambiguation Processor 504, Natural Language Processing Sub-system 505, Context importer 510, Step 4 Conditional Request Routing Processor 506, Interface to Messaging Server 507, Interface to Response & Service Backend 508, and Interface to Contact Center's Human Operators 509.

The Step 1 Analyzer 502 is a Token processor in charge of identifying the tokens in a text (words, abbreviations, numbers, and so on). Considering that texts may contain heavily misspelled words, concatenated words, words in multiple languages, acronyms, abbreviations, wrong punctuation, wrong capitalization and garbage characters, the task of the Step 1 Analyzer is to select the most relevant candidates for each token and to match them to elements represented in the Service & Knowledge Graph normalizing names and splitting tokens.

The Step 2 Analyzer 503 is an N-gram Processor designed to identify Knowledge Graph N-grams. N-grams include two or more tokens from the candidates selected by the Step 1 Analyzer. In one embodiment, the N-gram Processor supports smart combinations of tokens, their linked super-nodes in the Knowledge Graph, wildcards, classes of tokens and more complex regular expressions.

The task of Step 3 Disambiguation Processor 504 is to analyze all available candidate combinations of identified tokens and n-grams in the Graph to calculate a ranking of said combinations proportional to the probability of said combination to be the best interpretation for the analyzed text. In one embodiment the Disambiguation Processor leverages a weighted score assigned to each token/n-gram proportional to the probability of said token to actually match the analyzed word in the text. The Disambiguation Processor optimizes the analysis leveraging the assumption that the text is a short request about a specific service; the combinations that account for more tokens and n-grams connected to the same service receive a higher ranking.

The Natural Language Processing Sub-system 505 is the component dedicated to the analysis of phrase structures. According to one embodiment the NLP Sub-System 505 is activated only when the Step 2 Analyzer detects the presence of NLP triggers (e.g. pronouns, punctuation, conjugated verbs, multiple sentences, and so on) in the text. When activated the NLP Subsystem 505 receives the output of Step 3 Disambiguation Processor 504. This level of processing allows finer disambiguation since it analyzes all natural language features and structures in the text thus resolving issues of word dependencies and syntactic ambiguity. As a result, in one embodiment the NLP Sub-system 505 is used to distinguish between texts that can be very similar in terms of content, but differ as far as the actual type of requested action is concerned. In the context of contact center operations such scenario is often seen with texts that only request information about a specific service and texts that actually request the (same) service. In the same embodiment the NLP sub-system 505 leverages the normalized tokens provided by Step 1 and 2 to increase the ability to properly analyze the text.

Context Importer 510 provides the interface for external systems to import context related information in the Graph. As illustrated in FIG. 3, according to one embodiment of the invention, the Context Importer within the Multi-Grammar Language Processing System 301 connects to three external systems to provide: user profile information (302), history of the previous conversations (requests/responses) held by the user with the contact center (303) and contact center real time metrics (304). According to the same embodiment, this information is used to extend the Service & Knowledge Graph and increase the weight of tokens. In other words, n-grams and services known to be relevant to the user because mentioned in previous exchanges of an ongoing conversation, or n-grams that match known elements of the user profile, are assigned higher scores thus optimizing processing and increasing the level of confidence of the final output.

Step 4 Conditional Request Routing Processor 506 receives the analyzed text enriched with the features detected in the request and evaluates if the request should be forwarded to a human operator or to the Response & Service Backend, after verifying whether more information is needed from the user or not. In one embodiment, Step 4 Conditional Request Routing Processor leverages multiple parameters to optimize request routing. The parameters include: a confidence score proportional to the likelihood of having properly understood the request, the real time load of the contact center human operators and real time statistics about the measured quality of the automated answers for the specific service in question.

The Request Routing Processor (506) performs a critical role in ensuring that a Contact Center meets and exceeds its Key Performance Indicators. To match the operative needs of the Contact Center the Request Routing Processor (506) enables System Managers to configure and fine-tune the parameters conditioning the routing of inbound requests. Routing parameters can be configured on per service basis setting appropriate threshold values influencing the fate of the requests. Thresholds can be manually set to indicate maximum or minimum values allowed for any request's parameter (i.e. for the confidence score) in order for said request to be automatically processed rather than forwarded to a customer support operator. The Request Routing Processor can automatically calculate thresholds in order to adjust the amount of requests processed automatically or forwarded to customer support operators. This last option enables the Conditional Routing Request Processor (506) to respond in real time to the status of the contact center, as reported by component 303, preventing operator overloads (compromising quality over speed) or exploiting off-peek hours to increase the quality of the responses (forwarding more requests to the human operators). The Conditional Request Routing Processor (506) continuously evaluates all operative metrics of the contact center leveraging aggregated metrics but also specific metrics for each support group and single customer support operator.

In cooperation with the Conversation History Database 304 and leveraging the actual operator availability as reported by component 303, the Conditional Request Routing Processor is able to group and it can forward to the same customer support operator all the requests submitted by the same user. This feature enables the call contact center to optimize resources by grouping together multiple requests sent in a short timeframe by the same user concurrently avoiding to forward related requests to different operators.

Interface to Messaging Server 507 is the component in charge of forwarding the responses generated by the Multi-Grammar Language Processing System 501. In one embodiment the Interface 507 connect to a mail server or to an SMS server to send the message to the user. In another embodiment the Interface 507 sends the message to a real time instant messaging server in charge of pushing the message to the end-user's application. Interface 507 handles also the proper transmission of messages exceeding the maximum length allowed on the network. For example, GSM networks do not support the transmission of multi-PDU SMS thus leading to the delivery of a long text as multiple separate fragments (in any order). In order to avoid this problem, the Interface properly splits and reformats a longer message in multiple shorter messages ensuring also the correct order of each message delivery as to reflect the original complete text (longer than the 160 characters supported by the network).

Interface to Response & Service Backend 508 is the component dedicated to packaging the analyzed request, with all the information extracted from the text and from the injected context, and responsible to forwarding said analyzed request to the Response & Service Backend 508. In one embodiment the Interface 508 uses API to call into the Response & Service Backend 508 passing information about the service requested by the user, the entities mentioned if any and the available user's profile information.

Interface to Contact Center Human Operators 509 is the component dedicated to forward the request to the Contact Center Human Operators. In one embodiment the Interface 509 connects to the centralized request system of the contact center where requests are automatically routed to the first available operator.

At the core of the Multi-Grammar Language Processing System 501 sits the Service & Knowledge Graph 511. The Service & Knowledge Graph 511 includes all the supported grammars and language models together with their relationship with the services and the responses handled by the Contact Center. According to an embodiment of the invention, the Service & Knowledge Graph 511 includes: the list 512 of services and responses handled by the contact center, the language models of pre-analyzed training sets 513, the grammar-specific language models 514, domain specific keywords 515, thesaurus 516, fallback dictionaries 517 required to avoid overfitting the other models, smart n-grams 518 and smart regular expressions to extract specific features from the text. The main purpose of the Service & Knowledge Graph 511 is to connect language models, keywords, n-grams and any other entity mentioned in the Knowledge Graph to the relevant services and responses handled by the contact center.

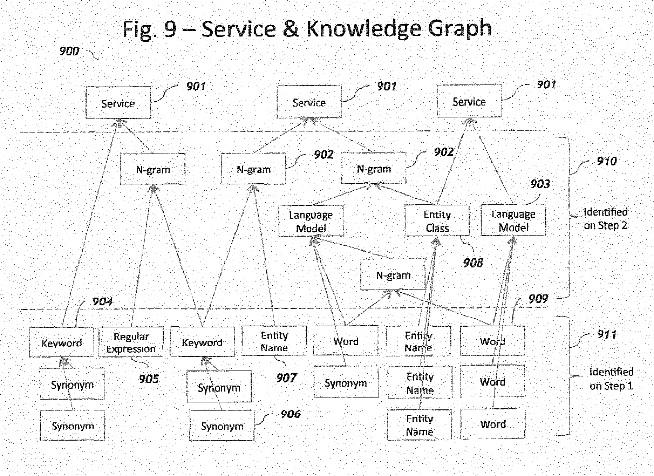

FIG. 9 illustrates a sample Service & Knowledge Graph 900 as it may appear in one embodiment of the invention. Moving from the top of the Graph 900 towards the bottom we see the services and responses 901 handled by the contact center, the language models (903), the n-grams (902), the keywords (904) together with words (909), synonyms (906) and entities (907) linked to the various services.

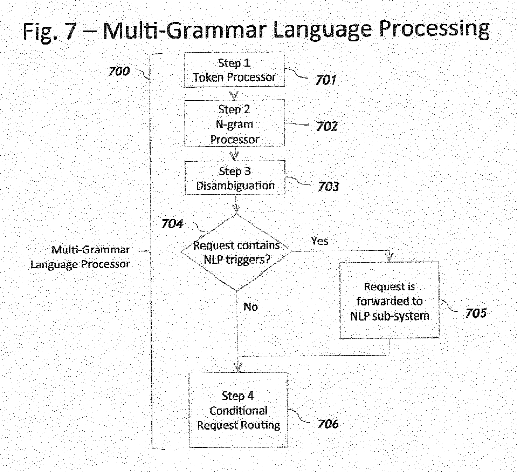

FIG. 7 is a flow chart illustrating the relationship between the components included in the Multi-Grammar Language Processing System 501 (shown in FIG. 5) when processing a user's request. The request is initially processed (710) by Step 1 Token Processor to identify token candidates. It is then analyzed (702) by Step 2 N-gram Processor to identify n-gram candidates to be passed (703) to Step 3 Disambiguation Processor that will select the more fitting combination of identified tokens/n-grams able to describe the text. During step 702 the text is analyzed also for NLP triggers that may hint to the presence of a natural language structure worth analyzing further and that may or may not activate (704) the NLP Sub-system. If the NLP Sub-System is activated, the just analyzed and disambiguated request is further processed (705) to identify phrase structures and other natural language features that may improve the understanding of the request. The resulting analyzed request, enriched with the detected information, is then passed (706) to Step 4 Conditional Request Routing Processor that performs a final assessment before evaluating how to handle the request.

The Disambiguation process carried out by the Step 4 Disambiguation Processor (506) is a critical element to properly identify the best candidate combination to understand a request. The main issue faced by the Disambiguation Processor (506) is the number of possible combinations to analyze (often millions of combinations are possible). It is then clear why an optimized disambiguation strategy needs to be implemented. As described in Fig. 7, processing starts by identifying candidate tokens (911) and candidate n-grams (910) and it continues by disambiguating and selecting the highest-ranking candidate combination in relation to the identified service.

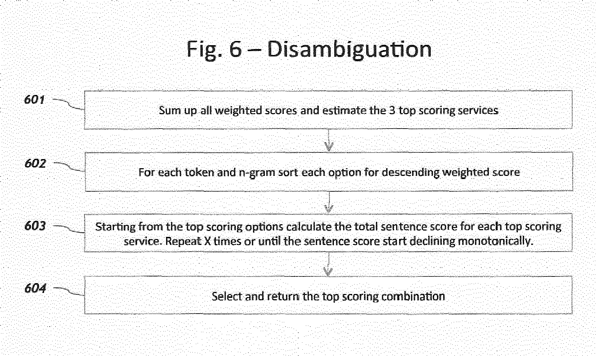

FIG. 6 illustrates an optimized disambiguation process as implemented in an embodiment where each identified token/n-gram is given a numeric confidence score proportional to the likelihood of said token/n-gram to match a specific service/response. The optimization leverages on the fact that the desired candidate combination will be the one yielding the highest score or the sum of the various candidates' high scores. Process (601) starts by adding the scores of all candidate tokens/n-grams matched to a service/response to then organize all referenced services/responses in descending order of scores and finally select the top 3 referenced services/responses. Starting from the top scoring tokens/n-grams and moving downward the system then iterates (603) over the available token/n-gram combinations matching any of the previously identified top 3 services/responses and skipping the others. In order to complete the analysis in a predictable time, only a predefined number of combinations are analyzed. Alternatively, the analysis continues until the total score starts descending monotonically for each of the analyzed service/response. Once the analysis is complete the Disambiguation Processor (504) picks the combinations with the highest score.

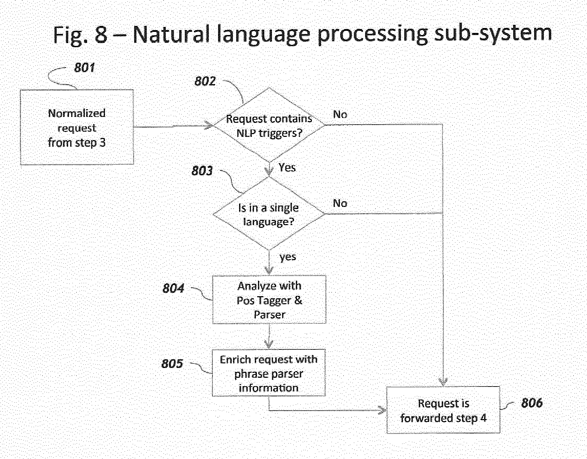

FIG. 8 illustrates the Natural Language Processing flow employed by the NLP Sub-system (505) according to an embodiment of the invention. A tokenized and normalized request is received (801) from Step 3 Disambiguation Processor (504), which verify (802) if it contains NLP triggers. If the request is estimated to likely contain natural language and (803) it is expressed in a single language, the request is forwarded (804) to a state of the art Part of Speech Tagger and Phrase Parser in charge of processing (805) the text. If the request does not contain natural language triggers and it is expressed in more than one language, then the request is directly forwarded (806) to Step 4 Conditional Request Routing Processor. As discussed in the flow chart, the Natural Language Processing Sub-System is not mandatory and can be skipped if the request is expressed in a language for which no reliable POS tagger is available, or if the request contains many non natural language features that may confuse the POS tagger leading to unreliable results.

Although the invention has been described by reference to particular illustrative embodiments thereof, many changes and modifications of the invention may become apparent to those skilled in the art without departing from the spirit and scope of the invention. The present invention is therefore intended to include all changes and modifications that may reasonably and properly be included within the scope of the present invention's contribution to the art.

The invention being thus described, it will be evident that the same may be varied in many ways by a routineer in the applicable arts. Such variations are not to be regarded as a departure from the spirit and scope of the invention to the extent that such variations and modifications are within the scope of the claims, including equivalent elements thereof.

## Claims

1. A computing system for automatic multi-grammar language processing, the system comprising:
a communication device arranged to receive a message from an end user comprising a combination of grammars and languages;
one or more data storage device comprising a first database of elements pertaining to supported grammars and a further database of predetermined services and/or responses of the computing system;
a message analyzer arranged to process the received message by extrapolating, for each element of the message, possible candidates and combinations of candidates matching known elements in the supported grammars and analyzing said candidates and combinations of candidates to match them with known services and/or responses;
the message analyzer arranged to determine a most probable combination of the candidates that matches the meaning of the actual request from the end user.

2. The system of claim 1 wherein the message analyzer:
identifies if the message contains structures and elements expressed in natural language and, in such case, initiates further processing the message with a natural language processor.

3. The system of claim 1 or 2, wherein the message is written in its entirety or partially in SMS Language.

4. The system of any preceding claim, wherein the message is written all or in part as a sequence of query keywords written all or in part in Natural Language and/or in multiple languages.

5. The system of any preceding claim, wherein the message comprises an end user request transmitted to the computer system over a network such as a mobile network and/or the Internet.

6. The system of any preceding claim wherein the message analyzer accesses information identified and extracted from the user message to select the proper response or the proper action to execute following up to the user request.

7. The system of any preceding claim wherein the message analyzer:
stores and analyzes an user conversation history in conjunction with the message received.

8. The system of any preceding claim further comprising an automatic processing system, the output of the message analyzer being used to determine whether the automatic message processing system should handle a request identified in the analyzed message or if the message should be forwarded to a human customer support operator.

9. The system of claim 8, wherein the status of the computing system and of the customer support operators is taken into account to determine if a request should be processed automatically or by a customer support operator.

10. The system of claim 8 or 9 wherein incoming requests by the same user are preferentially forwarded to the same customer support operator.

11. The system according to any preceding claim, wherein the message analyzer processes a message or portion thereof using multiple grammars and/or languages in parallel.

12. The system according to any preceding claim, wherein the message analyzer comprises any, any combination, or all of: a token analyzer; an n-gram analyzer; a disambiguation processor; a natural language processor; and/or a context importer.

13. A method for multi-grammar language processing comprising the steps of:
providing a computing device;
receiving a user message written in a combination of grammars and languages;
analyzing said message using said computing device to extrapolate, for each element of the message, possible candidates and combinations of candidates matching known elements in the supported grammars;
analyzing said candidates and combinations of candidates using said computing device to match them with known services and responses; and
analyzing the identified candidates using said computing device to select the most probable combination of candidates that matches the meaning of the actual request from the user.

14. A data carrier comprising machine readable instructions for the control of one or more processor of a computer system to function as multi-language grammar processing tool by:
analyzing a received message from a user to extrapolate, for each element of the message, possible candidates and combinations of candidates matching known elements in supported grammars stored on an accessible data store;
analyzing said candidates and combinations of candidates to match them with predetermined services and responses associated with the computer system; and
analyzing the identified candidates to select the most probable combination of candidates that matches the meaning of the actual request from the user

15. A contact center system comprising:
a Multi-Grammar Language processing system;
a Response & Service Backend; and
a Service and Knowledge Graph comprising grammars, related keywords, group of keyword, regular expressions, classes of words and language models linked in the graph to the responses and to the services handled by the contact center.
